# EUROPÄISCHE PATENTSCHRIFT

(11) **EP 1 115 347 B1**
(45) Veröffentlichungstag und Bekanntmachung des Hinweises auf die Patenterteilung: **15.12.2004**
(21) Anmeldenummer: 00960311.9
(22) Anmeldetag: 20.07.2000
(51) Int. Cl.: A61C 9/00

(54) **TRAGPLATTE FÜR EIN GEBISSMODELL**
SUPPORTING PLATE FOR A DENTURE MODEL
PLAQUE DE BASE D'UN MODELE DE DENTITION

(30) Priorität: 21.07.1999 DE 19934268
(43) Veröffentlichungstag der Anmeldung: 18.07.2001
(73) Patentinhaber: Azzaretto, Michael, 57470 Hombourg Haut (FR)
(72) Erfinder: Azzaretto, Michael, 57470 Hombourg Haut (FR)
(74) Vertreter: Holtfoth, Hans-Jürgen
(86) Internationale Anmeldenummer: PCT/DE2000/002415
(87) Internationale Veröffentlichungsnummer: WO 2001/006945

(56) Entgegenhaltungen:
- EP-A- 0 423 411
- WO-A-98/10709

## Beschreibung

Die Erfindung betrifft eine Tragplatte für ein Gebißmodell.

Zur Anfertigung von Zahnersatz, z.B. Zahnkronen, Brücken, Inlays etc. wird vom Zahntechniker ein positives Gebißmodell des Patienten benötigt.
Dabei werden die vom Zahnarzt gelieferten negativen Abformungen des Ober- und des Unterkiefers des Gebisses eines Patienten mit einer Modellmasse, z.B. Gips, ausgefüllt und jeweils eine Tragplatte angedrückt, die mit Haltestiften bestückt ist, die in die Modellmasse hineinragen und nach dem Aushärten der Modellmasse in der Modellmasse steckenbleiben.
Nach Aushärtung der Modellmasse ist nach Entfernen der negativen Abformung ein postives Gebißmodell des Ober- oder Unterkiefer des Patienten auf einer Tragplatte entstanden.

Dieses positive Gebißmodell mitsamt der Tragplatte wird mit einem entsprechenden positiven Gegenkiefermodell des Patienten in einem Gebißbewegungssimulator (Artikulator) montiert, wodurch individuelle Gebißbewegungen des Patienten nachgeahmt werden können.
Dadurch ist eine auf die Gebißstellung und -bewegung des Patienten abgestimmte, paßgenaue Anfertigung von Zahnersatz möglich.

Das auf der Tragplatte aufsitzende Gebißmodell muß zur Bearbeitung von der Tragplatte entfernt und wieder auf diese zurückgesetzt werden.
Häufig muß das Gebißmodell zudem in Kiefer- oder Zahnsegmente zersägt werden, um das Arbeiten an diesem Segment zu erleichtern.
Dabei wird zunächst das Gebißmodell mitsamt der Haltestifte von der Tragplatte abgehoben und anschließend in einzelne Segmente zersägt.
Danach werden die einzelnen Gebißmodellsegmente mittels der Haltestifte wieder möglichst genau an ihre frühere Position auf der Tragplatte zurückgesetzt und verbleiben so fest an der Tragplatte, auch bei einer oberseitigen Montage der Tragplatte in einen Artikulator, bei dem die Zahnreihe des Gebißmodells nach unten gerichtet ist.

Es ist eine Tragplatte für ein Gebißmodell aus der PCT-Patentschrift WO 98/10709 bekannt, die auf ihrer Oberseite mit einer bogenförmigen Vertiefung versehen ist, deren Seitenwände senkrechte Rillen aufweisen und in deren Boden zahlreiche Bohrungen mit eingesteckten Haltestiften vorgesehen sind.

Die Haltestifte bestehen aus Kunststoff und werden beim Zersägen des Gebißmodells in einzelne Kiefer- oder Zahnsegment gegebenfalls mit zersägt, was die Sägearbeit stark behindert und angesägte Haltestifte übrig läßt.

Desweiteren nachteilig ist bei der bekannten Tragplatte, daß alle in die Bohrungen am Boden der Vertiefung auf der Tragplatte eingesteckten Haltestifte im ausgehärteten Gebißmodell steckenbleiben und nicht entfernt werden können, was das Abnehmen und das Zurücksetzen des Gebißmodells bzw. einzelner Gebißmodellsegmente von der Tragplatte oder auf die Tragplatte erheblich erschwert und zu einem Abrieb oder Bruch der Modellmasse durch ein Verkanten der Haltestifte in den Bohrungen und ein schräges Abheben oder Aufsetzen des Gebißmodels oder einzelner Segmente auf die Tragplatte führt.

Nach dem Aushärten der in die negative Abformung des Gebisses eines Patienten gefüllten flüssigen Modellmasse, z.B. Gips, auf die die Tragplatte der bekannten Bauform vor der Aushärtung aufgesetzt wurde, weist das aus der Vertiefung der Tragplatte gehobene positive Gebißmodell an den Außenwänden eine den Rillen in der Vertiefung der Tragplatte entsprechende Rippenstruktur auf, so daß nach dem Zurücksetzen des Gebißmodells oder der Kiefer- und Zahnsegmente auf die Tragplatte die Rippen an den Außenwänden des Gebißmodells oder der Segmente in die Rillen der Seitenwände der Vertiefung der Tragplatte eingreifen.

Das hat jedoch den Nachteil, daß es sowohl beim Ablösen des Gebißmodells von der Tragplatte, als auch beim Zurücksetzen und wiederholten Herausnehmen des Gebißmodells oder einzelner Gebißmodellsegmente zu einem starken Abrieb an den Kanten des Gebißmodells bzw. seiner Gebißmodellsegmente kommt.

Auch beim Zurücksetzen und Einfügen eines Gebißmodellsegments an eine falsche Stelle im Gebißmodell in der Vertiefung der Tragplatte entsteht Abrieb oder Bruch an den Kanten des - meist aus Gips hergestellten - Gebißmodells.

Bereits durch kleinste Schäden am Gebißmodell bzw. Kiefer- oder Zahnsegment, etwa durch Splitterkanten oder Abrieb der Modellmasse, ist jedoch ein paßgenauer Sitz des Gebißmodells bzw. -segments auf der Tragplatte nicht mehr gewährleistet, so daß der nach dem Gebißmodell angefertigte Zahnersatz später im Mund des Patienten schlecht sitzt.

Der Erfindung liegt die Aufgabe zugrunde, eine Tragplatte für ein Gebißmodell zu schaffen, die das wiederholte Abnehmen des Gebißmodells oder einzelner Kiefer- oder Zahnsegmente von der Tragplatte und das paßgenaue Zurücksetzen des Gebißmodells oder einzelner Gebißmodellsegmente auf die Tragplatte ohne Abrieb der Modellmasse ermöglicht.

Erreicht wird dies durch eine Tragplatte für ein Gebißmodell, bei welcher die äußere Seitenwand der bogenförmigen Vertiefung auf der Tragplatte etwa um ca. 4/5 in ihrer Höhe verringert wird im Vergleich zur inneren Seitenwand.

Vorteilhafterweise weist die innere Seitenwand der bogenförmigen Vertiefung auf der Tragplatte eine Stufe in der Höhe der gegenüberliegenden verbliebenen äußeren Seitenwand der bogenförmigen Vertiefung auf, ist die Wand der Stufe senkrecht oder schräg ausgebildet und sind die senkrechte oder schräge Wand der Stufe der inneren Seitenwand sowie die äußere Seitenwand der bogenförmigen Vertiefung auf der Tragplatte jeweils zur Hälfte unterschiedlich konturiert, wobei unterschiedlich konturierte Seitenwände einander gegenüberliegen.

Zweckmäßigerweise sind die senkrechten Rillen der verbleibenden inneren Seitenwand oberhalb der Stufe sich nach unten verjüngend ausgebildet.

Bei einer weiteren Ausführungsform der Erfindung sind die sich zwischen den senkrechten sich nach unten verjüngenden Rillen befindenden Rippen nach unten hin sich verbreiternd ausgebildet.

Bei einer anderen Ausführungsform der Erfindung weisen die in den Bohrungen steckenden Haltestifte an ihren in die bogenförmige Vertiefung auf der Tragplatte hineinragenden oberen Enden ein Gewinde auf.

Zweckmäßigerweise weisen die Haltestifte an ihren auf der Unterseite der Tragplatte herausragenden Enden einen Schlitz auf.

Nachfolgend wird anhand der Zeichnungen eine Ausführungsform der Erfindung näher erläutert und beschrieben.

Es zeigen:
- Figur 1: die Tragplatte für ein Gebißmodell in Schrägansicht, etwa in natürlicher Größe,
- Figur 2: eine Seitenansicht des Gegenstandes nach Figur 1
und
- Figur 3: einen Haltestift, etwa 10-fach vergrößert.

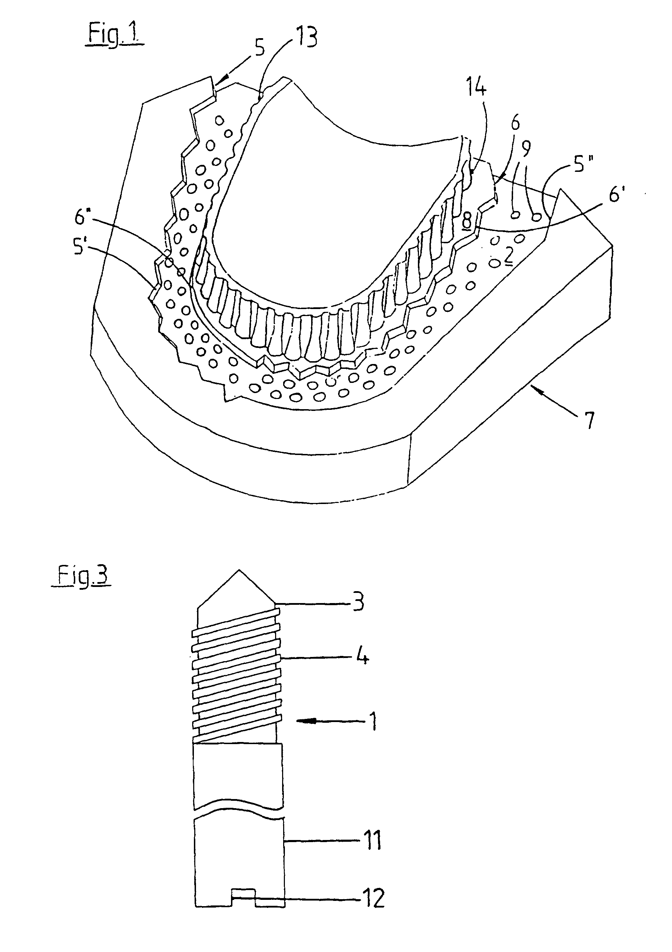

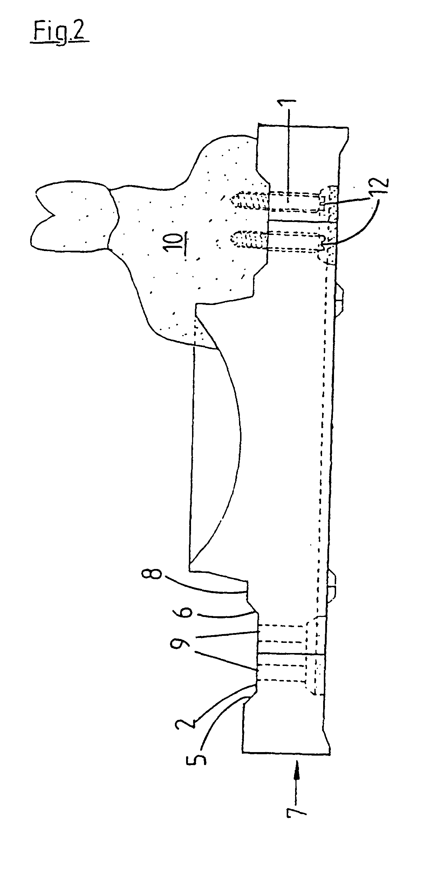

In Figur 1 und Figur 2 ist eine erfindungsgemäße Tragplatte dargestellt, bei welcher die äußere Seitenwand 5 der bogenförmigen Vertiefung 2 mit Bohrungen 9,9,9... auf der Tragplatte 7 um etwa 4/5 in der Höhe reduziert und schräg ausgebildet ist.

Die innere Seitenwand 6 weist eine Stufe 8 in der Höhe der gegenüberliegenden äußeren Seitenwand 5 auf.

Die senkrechte oder schräge Wand der Stufe 8 der inneren Seitenwand 6 und die äußere Seitenwand 5 sind jeweils zur Hälfte 5', 5"; 6', 6" unterschiedlich konturiert. Dabei liegen unterschiedlich konturierte Wandabschnitte 5', 6"; 5", 6' der inneren und äußeren Seitenwand 6, 5 einander gegenüber.

Durch die Reduzierung der Höhe der äußeren Seitenwand 5 werden das Gebißmodell 10 bzw. einzelne Gebißmodellsegmente ohne Abrieb der Modellmasse an den Kanten des Gebißmodells 10 oder einzelner Segmente von der Tragplatte 7 abgehoben und wieder zurückgesteckt.

Die unterschiedlichen Wandgestaltungen der inneren und äußeren Seitenwand 5, 6 vermeiden, daß Kiefer- oder Zahnsegmente versehentlich an einer falschen Position auf die Tragplatte 7 zurückgesteckt werden, da eine rasche Zuordnung des Gebißmodellsegments durch die optisch leicht und schnell wahrnehmbare unterschiedliche Konturierung des Segments stattfindet. Auf diese Weise wird ein Abrieb an den Kanten des Gebißmodellsegments durch falsches Zurückstecken und Abheben vermieden.

Die senkrechten Rillen 13 auf der inneren Seitenwand 6 sind in der Figur 1 sich nach unten verjüngend dargestellt. Die sich zwischen den Rillen 13 befindenden Rippen 14 verlaufen in ihrem oberen Bereich parallel und verbreitern sich in ihrem unteren Bereich.

Der in Figur 3 dargestellte Haltestift 1, der in eine Bohrung 9 am Boden der bogenförmigen Vertiefung 2 auf der Tragplatte 7 etwa bis zur Hälfte eingesteckt wird, weist an seinem oberen Ende 3 ein Gewinde 4 auf.

Dieses Gewinde 4 ragt in die ausgehärtete Modellmasse des Gebißmodells 10 und wird von dieser festgehalten.

Das untere freie Ende 11 des Haltestiftes 1, welches z.B. zylindrisch oder konisch u.a. ausgebildet sein kann, wird beim Einsetzen des Gebißmodells 10 in die Tragplatte 7 in die entsprechend geformten Bohrung 9 eingeschoben.

Um die Zahl der im Gebißmodell 10 verbleibenden Haltestifte 1,1,1... auf nur die zur Fixierung des Gebißmodells 10 bzw. einzelner Gebißmodellsegmente auf der Tragplatte 7 notwendigen Haltestifte 1, 1, 1... zu verringern, werden nun alle unnötigen Haltestifte 1,1,1... aus dem Gebißmodell 10 herausgedreht.

Die herausgedrehten Haltestifte 1,1,1... können zur vollständigen Bestückung einer neuen Tragplatte verwendet werden.

In den Schlitz 12 am unteren Ende 11 des Haltestiftes 1 kann ein Schraubendreher zum leichteren Herausdrehen des Haltestiftes 1 aus dem Gebißmodell 10 verwendet werden. Wird versehentlich ein falscher Haltestift 1 herausgedreht, so kann er einfach an dieselbe Stelle im Gebißmodell 10 wieder eingedreht werden.

## Patentansprüche

1. Tragplatte (7) für ein Gebißmodell (10), die auf ihrer Oberseite mit einer bogenförmigen Vertiefung (2) versehen ist, deren Seitenwände senkrechte Rillen (13) aufweisen und in deren Boden zahlreiche Bohrungen (9) mit eingesteckten Haltestiften (1) vorgesehen sind, und deren äußeren Seitenwand (5) senkrecht oder schräg ausgebildet ist
**dadurch gekennzeichnet, daß**
- die äußere Seitenwand (5) der bogenförmigen Vertiefung (2) auf der Tragplatte (7) etwa um 4/5 in ihrer Höhe reduziert wird im Vergleich zur inneren Seitenwand.

2. Tragplatte nach Anspruch 1,
**dadurch gekennzeichnet, daß**
- die innere Seitenwand (6) der bogenförmigen Vertiefung (2) auf der Tragplatte (7) eine Stufe (8) in der Höhe der gegenüberliegenden verbliebenen äußeren Seitenwand (5) der bogenförmigen Vertiefung (2) aufweist,
- die Wand der Stufe (8) senkrecht oder schräg ausgebildet ist
und
- die senkrechte oder schräge Wand der Stufe (8) der inneren Seitenwand (6) sowie die äußere Seitenwand (5) der bogenförmigen Vertiefung (2) auf der Tragplatte (7) jeweils zur Hälfte (6', 6" ; 5', 5") unterschiedlich konturiert sind,
wobei
- unterschiedlich konturierte Wandabschnitte (6', 5"; 6", 5') der inneren Seitenwand (6) und der äußeren Seitenwand (5) einander gegenüberliegen.

3. Tragplatte nach Anspruch 1,
**dadurch gekennzeichnet, daß**
die senkrechten Rillen (13) der verbleibenden inneren Seitenwand (6) oberhalb der Stufe (8) sich nach unten verjüngend ausgebildet sind.

4. Tragplatte nach Anspruch 3,
**dadurch gekennzeichnet, daß**
die sich zwischen den senkrechten sich nach unten verjüngenden Rillen (13) befindenden Rippen (14) nach unten hin sich verbreiternd ausgebildet sind.

5. Tragplatte nach Anspruch 1,
**dadurch gekennzeichnet, daß**
die in den Bohrungen (9,9,9...) steckenden Haltestifte (1,1,1...) an ihren in die bogenförmige Vertiefung (2) auf der Tragplatte (7) hineinragenden oberen Enden (3,3,3...) ein Gewinde (4, 4, 4...) aufweisen.

6. Tragplatte nach Anspruch 1,
**dadurch gekennzeichnet, daß**
die Haltestifte (1,1,1...) an ihren aus der Unterseite der Tragplatte (7) herausragenden Enden (11, 11, 11...) einen Schlitz (12, 12, 12...) aufweisen.

## Claims

1. Supporting plate (7) for a denture model (10) with an arch-shaped indentation (2) in its upper side, this indentation having side walls with vertical grooves (13) and having, in its base, numerous drilled holes (9) in which retention pins (1) are positioned and with the outer side wall of the indentation (5) being vertical or diagonal,
having the feature that
- the outer side wall (5) of the arch-shaped indentation (2) in the supporting plate (7) is reduced in height by about 4/5^{th} as compared to the inner side wall.

2. Supporting plate as per Claim 1,
having the feature that
- the inner side wall (6) of the arch-shaped indentation (2) in the supporting plate (7) has a step (8) at the height of the opposite remaining outer side wall (5) of the arch-shaped indentation (2),
- the wall of the step (8) is vertical or diagonal
and
- one-half of the vertical or diagonal wall of the step (8) in the inner side wall (6) and one-half of the outer side wall (5) of the arch-shaped indentation (2) in the supporting plate (7) are each contoured differently (6', 6"; 5', 5")
with
- differently contoured wall sections (6' 5"; 6" 5') of the inner side wall (6) and the outer side wall (5) facing each other.

3. Supporting plate as per Claim 1,
having the feature that
the vertical grooves (13) in the remaining inner side wall (6) above the step are shaped to narrow downwards (8).

4. Supporting plate as per Claim 3,
having the feature that
the ribs (14) between the vertical grooves (13) that narrow downwards are shaped to widen downwards.

5. Supporting plate as per Claim 1,
having the feature that
the retention pins (1, 1, 1...) positioned in the drilled holes (9, 9, 9...) have a screw thread (4, 4, 4 ...) at their upper ends (3, 3, 3 ...) which project into the arch-shaped indentation (2) in the supporting plate (7).

6. Supporting plate as per Claim 1,
having the feature that
the retention pins (1, 1, 1...) have a slit (12, 12, 12, ...) in their ends (11, 11, 11 ...) which project from the bottom of the supporting plate (7).

## Revendications

1. Plaque de base (7) pour un modèle de dentition (10), qui est pourvue sur son côté supérieur d'un renfoncement (2) en forme d'arc, dont les parois latérales présentent des gorges verticales (13) et dans le fond duquel sont prévus de nombreux perçages (9) avec des tiges de fixation (1) enfichées, et dont la paroi latérale extérieure (5) est verticale ou oblique,
**caractérisée en ce que**
la paroi latérale extérieure (5) du renfoncement (2) en forme d'arc est réduite sur la plaque de base (7) d'environ 4/5e de sa hauteur par comparaison à la paroi latérale intérieure.

2. Plaque de base selon la revendication 1,
**caractérisée en ce que**
la paroi latérale intérieure (6) du renfoncement (2) en forme d'arc présente sur la plaque de base (7) un gradin (8) à la hauteur de la paroi latérale extérieure (5) restante opposée du renfoncement (2) en forme d'arc,
la paroi du gradin (8) est verticale ou oblique, et
la paroi verticale ou oblique du gradin (8) de la paroi latérale intérieure (6) ainsi que la paroi latérale extérieure (5) du renfoncement (2) en forme d'arc sont pourvues d'un contour différent sur la plaque de base (7) à chaque fois à raison d'une moitié (6', 6" ; 5', 5"),
des portions de paroi de contours différents (6', 5" ; 6", 5') de la paroi latérale intérieure (6) et de la paroi latérale extérieure (5) étant en regard.

3. Plaque de base selon la revendication 1,
**caractérisée en ce que**
les gorges verticales (13) de la paroi latérale intérieure restante (6) sont réalisées au-dessus du gradin (8) de manière à rétrécir vers le bas.

4. Plaque de base selon la revendication 3,
**caractérisée en ce que**
les nervures (14) situées entre les gorges (13) verticales rétrécissant vers le bas sont réalisées de manière à s'élargir vers le bas.

5. Plaque de base selon la revendication 1,
**caractérisée en ce que**
les tiges de fixation (1, 1, 1...) enfichées dans les perçages (9, 9, 9...) présentent au niveau de leur extrémité (3, 3, 3...) supérieure pénétrant dans le renfoncement (2) en forme d'arc sur la plaque de base (7) un filetage (4, 4, 4...).

6. Plaque de base selon la revendication 1,
**caractérisée en ce que**
les tiges de fixation (1, 1, 1...) présentent au niveau de leur extrémité (11, 11, 11...) sortant du côté inférieur de la plaque de base (7) une fente (12, 12, 12...).
